(19) Europäisches Patentamt

European Patent Office

Office européen des brevets

(11) **EP 4 455 242 A1**

(12) **EUROPEAN PATENT APPLICATION**
published in accordance with Art. 153(4) EPC

(43) Date of publication:
**30.10.2024 Bulletin 2024/44**

(21) Application number: **22911213.1**

(22) Date of filing: **20.12.2022**

(51) International Patent Classification (IPC):
*C09J 11/04* (2006.01)  *C09J 11/06* (2006.01)
*C09J 163/00* (2006.01)

(52) Cooperative Patent Classification (CPC):
**C09J 11/04; C09J 11/06; C09J 163/00**

(86) International application number:
**PCT/JP2022/046837**

(87) International publication number:
**WO 2023/120511 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.12.2021  JP 2021205733**

(71) Applicant: **TOYOBO CO., LTD.**
**Osaka-shi, Osaka 530-0001 (JP)**

(72) Inventor: **SHIBA, Takuya**
**Otsu-shi, Shiga 520-0292 (JP)**

(74) Representative: **Müller-Boré & Partner**
**Patentanwälte PartG mbB**
**Friedenheimer Brücke 21**
**80639 München (DE)**

(54) **ADHESIVE COMPOSITION AND LAMINATE**

(57)    An object of the present invention is to provide an adhesive composition having high tensile lap-shear strength from substrates and high curing properties.

An adhesive composition comprising an aromatic epoxy resin (A) with two or more functional groups, an aliphatic epoxy resin (B) with two or more functional groups, an epoxy resin hardener (C), a hardening accelerator (D), and a thixotropic agent (E), wherein the aliphatic epoxy resin (B) has a total chlorine content of 1.0% by mass or less.

EP 4 455 242 A1

**Description**

TECHNICAL FIELD

The present invention relates to an adhesive composition. More specifically, the present invention relates to an epoxy resin adhesive composition with excellent properties such as shear properties, curing properties, and heat-resistance, and a laminate using the same.

BACKGROUND ART

Epoxide resin adhesives have been conventionally used in a wide range of applications such as coatings, molding materials, heat dissipation materials, and adhesives due to their superior mechanical properties, water-resistance, chemical-resistance, and heat-resistance, thereby making themselves indispensable in industry.

Together with an epoxide resin adhesive, a reactive diluent has been widely used to improve workability by reducing viscosity and also to provide flexibility. Such a reactive diluent is exemplified by epoxy resins with low viscosity such as a monofunctional and/or aliphatic epoxy resin. For example, in Patent Document 1, an aliphatic glycidyl ether is added to improve viscosity characteristics, enabling increased workability. In Patent Document 2, it is reported that the addition of the epoxy resin with aliphatic hydrocarbon structure with six or more carbon atoms improves flexibility.

CITATION LIST

PATENT DOCUMENTS

Patent Document 1: JP-B2-6632401
Patent Document 2: WO 2017/191801

SUMMARY OF THE INVENTION

PROBLEMS TO BE SOLVED BY THE INVENTION

As disclosed in the Patent Documents, reactive diluents are very effective, however, the use of an aliphatic epoxy resin as a reactive diluent has caused insufficient curing properties in some cases. The present invention has been done against such a background of the conventional art. It is an object of the present invention to provide an epoxy resin adhesive having high tensile lap-shear strength from substrates and high curing properties.

SOLUTION TO THE PROBLEMS

As a result of diligent studies, the present inventors have found that the problem can be solved by the following means and have completed the present invention. The present invention has the following features.
[1] An adhesive composition comprising: an aromatic epoxy resin (A) with two or more functional groups; an aliphatic epoxy resin (B) with two or more functional groups; an epoxy resin hardener (C); a hardening accelerator (D); and a thixotropic agent (E); wherein the aliphatic epoxy resin (B) with two or more functional groups has a total chlorine content of 1.0% by mass or less.
[2] The adhesive composition according to [1], wherein the adhesive composition contains the aliphatic epoxy resin (B) with two or more functional groups in an amount of from 1 part by mass to 30 parts by mass, based on 100 parts by mass of a total amount of the aromatic epoxy resin (A) with two or more functional groups and the aliphatic epoxy resin (B) with two or more functional groups.
[3] The adhesive composition according to [1] or [2], wherein the adhesive composition further comprises a hygroscopic inorganic filler (F).
[4] The adhesive composition according to [3], wherein the hygroscopic inorganic filler (F) is calcium oxide.
[5] A laminate comprising an adhesive layer, wherein the adhesive layer is a cured product of the adhesive composition according to any one of [1] to [4].

ADVANTAGEOUS EFFECTS OF THE INVENTION

An adhesive composition of the present invention has high tensile lap-shear strength from substrates and high curing properties; therefore, the adhesive composition of the present invention can be suitably used as a structural adhesive.

DESCRIPTION OF EMBODIMENTS

Hereinafter, the present invention will be described in detail. The adhesive composition of the present invention comprises an aromatic epoxy resin (A) with two or more functional groups, an aliphatic epoxy resin (B) with two or more functional groups, an epoxy resin hardener (C), a hardening accelerator (D), and a thixotropic agent (E) as essential components.

<Aromatic epoxy resin (A) with two or more functional groups>

The aromatic epoxy resin (A) with two or more functional groups (hereinafter "aromatic epoxy resin (A)" or merely "component (A)") is not particularly limited when the aromatic epoxy resin (A) has at least one aromatic ring and two or more oxirane rings in one molecule. Examples of the aromatic epoxy resin (A) with two or more functional groups of the present invention include monocyclic aromatic glycidyl ether compound formed by glycidyl etherification of polyvalent aromatic alcohols such as catechol, resorcinol, hydroquinone, and phthalic acid; bisphenol type epoxy resin formed by glycidyl etherification of bisphenol compounds such as bisphenol A, bisphenol F, bisphenol AP, bisphenol AF, bisphenol B, bisphenol BP, bisphenol C, bisphenol E, bisphenol M, bisphenol S, bisphenol P, bisphenol PH, and bisphenol Z; polycyclic aromatic epoxy resins formed by glycidyl etherification of polycyclic aromatic compounds such as naphthalene, biphenyl, tetramethylbiphenyl, bisphenol fluorene, biscresol fluorene, and tetraphenylolethane; novolac epoxy resins formed by epoxidizing novolac compounds such as phenol novolac, cresol novolac, and bisphenol A novolac; glycidyl amine epoxy resin formed by glycidyl etherification of aromatic amino compounds such as aniline, o-methylaniline, p-aminophenol, and m-phenylenediamine; polyfunctional epoxy resins such as triglycidyl isocyanurate, triphenylglycidyl ether methane epoxy resin, xylene epoxy resin, tetrakisphenolethane epoxy resin, and naphthalene epoxy resin; glycidyl compounds of alkylene oxide formed by glycidylation of alkylene oxide adducts such as an ethylene oxide adduct of bisphenol A and a propylene oxide adduct of bisphenol A; and mixtures of partial condensates of these compounds. Among them, bisphenol epoxy resin is preferred due to mechanical properties such as adhesion and heat-resistance, and bisphenol A epoxy resin and bisphenol F epoxy resin are more preferred due to facilitated viscosity adjustment of a composition. The state of bisphenol A epoxy resin changes depending on its molecular weight. A semi-solid bisphenol A epoxy resin is preferred, and a liquid bisphenol A epoxy resin is particularly preferred.

<Aliphatic epoxy resin (B) with two or more functional groups>

The aliphatic epoxy resin (B) with two or more functional groups (hereinafter "aliphatic epoxy resin (B)" or merely "component (B)") is not particularly limited when the aliphatic epoxy resin (B) has an aliphatic hydrocarbon group and two or more oxirane rings in one molecule, and the aliphatic hydrocarbon group may have an alicyclic backbone. However, the aliphatic hydrocarbon group does not include an aromatic group. Examples of the aliphatic epoxy resin (B) of the present invention include diepoxy compounds derived from cyclic fatty alcohols such as dimethylol dicyclopentadiene diglycidyl ether; diepoxy compounds derived from cyclic fatty dicarboxylic acids such as hexahydro phthalate diglycidylester and hexahydro terephthalate diglycidylester; diepoxy compounds derived from fatty alcohols such as 1,4-butanediol diglycidylether and 1,6-hexanediol diglycidylether; and bifunctional epoxy resins such as jER871 (product name, manufactured by Mitsubishi Chemical Group Corporation) and jER872 (product name, manufactured by Mitsubishi Chemical Group Corporation), each of which are epoxy resins having a backbone of a dimeric acid.

The aliphatic epoxy resin (B) of the present invention preferably has a total chlorine content of 1.0% by mass or less from the viewpoint of curing properties of the adhesive composition. The total chlorine content is more preferably 0.8% by mass or less and particularly preferably 0.7% by mass or less. The term "total chlorine content" represents an amount of chlorine atoms contained in the aliphatic epoxy resin (B) (% by mass). The total chlorine content can be measured by a method described in JIS K 7243-3: 2005. Specific examples of the aliphatic epoxy resin (B) include EX212L (1,6-hexanediol type, total chlorine content: 0.4% by mass), EX214L (1,4-butanediol type, total chlorine content: 0.4% by mass), EX216L (cyclohexanedimethanol type, total chlorine content: 0.4% by mass), EX211L (2,2-dimethyl propanediol type, total chlorine content: 0.7% by mass), EX321L (trimethylolpropane type, total chlorine content: 0.4% by mass) (all manufactured by Nagase ChemteX Corporation); YX-8000 (hydrogenated bisphenol A type, total chlorine content: 0.011% by mass), YX-8034 (hydrogenated bisphenol A type, total chlorine content: 0.006% by mass) (all manufactured by Mitsubishi Chemical Group Corporation), EP-4088S (dicyclopentadiene dimethanol type, total chlorine content: 0.3% by mass), EP-4088L (dicyclopentadiene dimethanol type, total chlorine content: 0.09% by mass) (all manufactured by ADEKA CORPORATION).

Although the reason why 1.0% by mass or less of the total chlorine content of the aliphatic epoxy resin (B) with two or more functional groups improves curing properties has not yet been confirmed, it is resumed that the aliphatic epoxy resin (B) with two or more functional groups having a high total chlorine content contains impurities in which epoxy groups are partially substituted with other functional groups, thereby inhibiting a crosslinking reaction. For example, in the reaction to produce an epoxy resin, an intermediate having a 3-chloro-2-hydroxypropyl group in a position intended for a glycidyl group is produced. Assuming that the intermediate remains as a chlorine-containing impurity in the case of using the two-functional aliphatic epoxy resin (B) having a high total chlorine content, a compound in which either of the glycidyl groups of the two-functional aliphatic epoxy resin is substituted with the 3-chloro-2-hydroxypropyl group is present as an impurity compound. The impurity consumes the reaction point of the glycidyl group located at one end of the molecule, which is ordinally intended for crosslinking reaction, and the absence of the glycidyl group located at the other end of the molecule makes it impossible for forming cross-linking structure, resulting in a decrease in the cross-linking density of the cured product. In case where an aliphatic epoxy resin (B) with three or more functional groups is used, the inhibition of cross-linking reaction may occur by the same mechanism.

The adhesive composition of the present invention contains the aliphatic epoxy resin (B) in an amount of preferably from 1 part by mass to 30 parts by mass and more preferably from 5 parts by mass to 30 parts by mass, based on 100 parts by mass of a total amount of the aromatic epoxy resin (A) and the aliphatic epoxy resin (B) with two or more functional groups. The content of the aliphatic epoxy resin (B) equal to or greater than the lower limit can increase workability by dilution effect. The content of the aliphatic epoxy resin (B) equal to or lower than the upper limit can improve heat-resistance of the cured product.

<Epoxy resin hardener (C)>

A known compound capable of curing an epoxy resin can be used as an epoxy resin hardener (C) of the present invention. Examples of such epoxy resin hardener include dicyandiamide; hydrazides such as adipic dihydrazide, isophthalic dihydrazide, and adipohydrazide; bisphenols such as bisphenol A, bisphenol F, and bisphenol E; catechols such as catechol, resorcinol, and homocatechol; biphenols such as biphenol and tetramethylbiphenol; bis-cresols such as bis-cresol fluorene; hydroquinones such as hydroquinone; liquefied phenols such as tris(dimethylaminomethyl)phenol; novolacs such as phenol novolac, cresol novolac, bisphenol A novolac, xylylene novolac, triphenylmethane novolac, biphenyl novolac, dicyclopentadiene phenol novolac, terpene phenol novolac; aliphatic amines such as diethylenetriamine, triethylenetetramine, tetraethylenepentamine, m-xylylenediamine, trimethylhexamethylenediamine, 2-methylpentamethylenediamine, diethylaminopropylamine; cycloaliphatic polyamines such as isophoronediamine, 1,3-bis(aminomethyl)cyclohexane, bis(4-aminocyclohexyl)methane, norbornanediamine, 1,2-cyclohexanediamine, and 4,4'-methylenebis(2-methylcyclohexaneamine); polyether polyamines such as poly(oxypropylene)diamine and polyoxypropylene triamine; polycyclohexyl polyamine mixtures; piperazines such as piperazine and N-aminoethylpiperazine; polyaminoamides such as semicarbazide and carbamoyl acetonitrile; polyamideamines such as a condensation product of a dimer acid or a fatty acid with a polyamine; polyamines obtained by Michael addition of an amine and an acrylate compound; Mannich reaction products; ketimines; aromatic amines such as melamines, guanamines including acetoguanamine and benzoguanamine, guanidines, 4,4'-diaminodiphenylmethane, 4,4'-diaminodiphenyl sulfone, and m-phenylenediamine; acid anhydrides such as tetrahydrophthalic anhydride, hexahydrophthalic anhydride, methyltetrahydrophthalic anhydride, methylhexahydrophthalic anhydride, benzophenonetetracarboxylic dianhydride, pyromellitic dianhydride, trimellitic anhydride, methylnadic anhydride, hydrogenated methylnadic anhydride, dodecenylsuccinic anhydride, succinic anhydride, phthalic anhydride, aliphatic dibasic acid polyanhydride, and ethylene glycol bis-anhydro trimellitate; active esters of polycarboxylic acids such as a boron trifluoride complex, a boron trichloride complex, a sulfonium salt, and an onium salt; and polythiols. Among them, bisphenols are preferred as epoxy resin hardeners from the viewpoint of workability and heat-resistance, and bisphenols and phenol novolacs are more preferred.

The amount of the epoxy resin hardener (C) in the adhesive composition of the present invention is within the range in which the total epoxy group number of the aromatic epoxy resin (A) and the aliphatic epoxy resin (B) with respect to the number of the active hydrogen groups in the epoxy resin hardener (C) is preferably 1.00 to 1.10 : 1.00 and more preferably 1.05 to 1.10 : 1.00. This is because the excessive amount of the epoxy groups with respect to the active hydrogen groups causes branching-reaction, enabling increased heat-resistance of the cured product.

<Hardening accelerator (D)>

A compound known as an epoxy resin hardening accelerator can be used as a hardening accelerator (D) of the present invention. Examples of such hardening accelerator include urea derivatives such as 3-(4-chlorophenyl)-1,1-dimethylurea, 3-(3,4-dichlorophenyl)-1,1-dimethylurea, N,N'-(4-methyl-1,3-phenylene)bis[N,N'- dimethylurea], and N'-[3-[[[(dimethylamino)carbonyl] amino] methyl] - 3,5,5 -trimethylcyclohexyl] -N, N-dimethylurea; DBU type amines such as DBU/1,8-diazabicyclo[5.4.0]-7-undecene salt, DBU/phenoxide salt, DBU/octanoicacidsalt, DBU/formate salt, and DBU/p-tolueneslufonate salt; 1,5-diazabicyclo[4.3.0]nonene-5 (byname: DBN); tertiary amines such as triethylamine, N,N,N',N'-tetramethylethylenediamine, tetramethylguanidine, and triethylenediamine ; alcohol amines such as dimethylaminomethanol and dimethylaminoethanol; etheramines such as bis(2-dimethylaminoethyl)ether; tertiary amines with a phenol group such as 2,4,6-tris(dimethylaminomethyl)phenol (byname: DMP-30); amine adducts; imidazoles such as 1,2-dimethylimidazole, 2-ethyl-4-methylimidazole, 2-phenylimidazole, 2-phenyl-4-methylimidazole, N-benzyl-2-methylimidazole, N-benzyl-2-phenylimidazole, 2,4-dimethylimidazole, imidazole, 1-methylimidazole, 2-methylimidazole, an adduct of 2,4-diamino-6-[2'-methylimidazolyl-(1')]-ethyl-s-triazine with isocyanuric acid, 2-phenyl-4,5-dihydroxymethylimidazole, 2,4-diamino-6-[2'-methylimidazolyl-(1')]-ethyl-s-triazine, and 1-cyanoethyl-2-phenylimidazolium trimellitate; imidazole adducts such as AJICURE PN-23, PN-23J, PN-H, PN-31, PN-31J, PN-40, PN-40J, and PN-50 (all manufactured by Ajinomoto Fine-Techno Co.,Inc.), and NOVACURE HX-3722, HX-3742, and HX-3792 (all manufactured by Asahi Kasei Corporatio); phosphorus compounds such as triphenyl phosphine, tri-o-tolylphosphine, tri-m-tolylphosphine, tri-p-tolylphosphine, tri-(2,4-xylyl)phosphine, tri-(2,5-xylyl)phosphine, tri-(3,5-xylyl)phosphine, tris(p-methoxyphenyl)phosphine, tris(o-methoxyphenyl)phosphine, triphenylphosphine triphenylborane, tetraphenylphosphonium tetraphenylborate, tetraphenylphosphonium tetra-p-tolylborate, and tris(2,6-dimethoxyphenyl)phosphine. Among them, tertiary amines, imidazoles, and phosphorus compounds are preferred due to their activity.

A content of the hardening accelerator (D) in the adhesive composition of the present invention is preferably from 0.1 parts by mass to 20 parts by mass, more preferably from 0.5 parts by mass to 10 parts by mass, and further preferably from 1 part by mass to 5 parts by mass, based on 100 parts by mass of a total amount of the aromatic epoxy resin (A) and the aliphatic epoxy resin (B). A content of the hardening accelerator (D) within the range enables high curing properties and stability due to catalyst activity and reaction rate.

<Thixotropic agent (E)>

A compound known as a thixotropic agent for an epoxy resin can be used as a thixotropic agent (E) of the present invention. Examples of such thixotropic agent include fumed silica such as hydrophilic fumed silica and surface-treated hydrophobic fumed silica; carbon blacks such as ketjen black; microscopic particles such as ultra-fine precipitated calcium carbonate, sepiolite, and metal powders; inorganic fillers with a high aspect ratio such as wollastonite, mica, talc, kaolin, barium sulfate, calcium carbonate, magnesium hydroxide, and clay. Since fumed silica has a small particle size and can impart thixotropy effectively, fumed silica is preferred, and hydrophobic fumed silica is more preferred among them.

A content of the thixotropic agent (E) in the adhesive composition of the present invention is preferably from 1 part by mass to 20 parts by mass, more preferably from 0.5 parts by mass to 10 parts by mass, and further preferably from 1 part by mass to 5 parts by mass, based on 100 parts by mass of a total amount of the aromatic epoxy resin (A) and the aliphatic epoxy resin (B). A content of the thixotropic agent (E) within the range enables an desired thixotropy and thus improved workability.

<Hygroscopic inorganic filler (F)>

Further, the adhesive composition of the present invention preferably comprises a hygroscopic inorganic filler (F) (hereinafter, "inorganic filler (F)" or merely "component (F)"). The hygroscopic inorganic filler (F) can prevent bubbles during curing. The hygroscopic inorganic filler (F) is exemplified by an inorganic filler that reacts chemically with water and an inorganic filler with porosity capable of adsorbing moisture.

Examples of the inorganic filler (F) used in the present invention include metallic oxides such as magnesium oxide, calcium oxide, and silicon dioxide, and metal hydroxides. Among them, calcium oxide is preferred due to its ability to reduce curing time effectively, although the reason is still unknown, and to react chemically with water.

The content of the inorganic filler (F) in the adhesive composition of the present invention is preferably from 1 part by mass to 20 parts by mass, more preferably from 0.5 parts by mass to 10 parts by mass, and further preferably from 1 part by mass to 5 parts by mass, based on 100 parts by mass of a total amount of the aromatic epoxy resin (A) and the aliphatic epoxy resin (B). A content of the inorganic filler (F) within the range can prevent bubbles during curing and allows the cured product to have high toughness.

<Other components>

In addition to the components described above, the adhesive composition of the present invention may further contain an elastomer, a core shell rubber, a coupling agent, an inorganic filler, a spacer, and/or other additives.

Elastomers are used to modify adhesives. Examples of the elastomer include rubber-modified epoxy resins such as NBR (acrylonitrile-butadiene rubber), SBR (styrenebutadiene rubber), polybutadiene, and carboxyl terminal-modified acrylonitrile-butadiene rubber; ADEKA RESIN EPR series (manufactured by ADEKA CORPORATION) and Hypox RA series such as Hypox RA840 and RA1340 (manufactured by Huntsman CVC Thermoset); urethane modified epoxy resins having a urethane bond and two or more oxirane rings in a molecule; the elastomer is not particularly limited when the elastomer has such components, and examples of the elastomer further include; ADEKA RESIN EPU series such as ADEKA RESIN EPU73B, and Hypox UA series such as Hypox UA10 (manufactured by Huntsman CVC Thermoset); liquid rubbers such as NBR, SBR, and polybutadiene; silicone resins; crosslinked rubber fine particles such as crosslinked NBR and crosslinked BR; urethane rubbers; carboxyl-terminated and amino-terminated acrylonitrile-butadiene rubbers (CTBN, ATBN); NBR rubbers with a carboxylic acid in the main chain; carboxyl-terminated polybutadiene; liquid polysulfides; urethane prepolymers; fine particles of engineering plastic resins such as poly ether sulfone, polyamide, polyetherimide, acrylic, polyester, and polycarbonate. These may be used alone or in combination of two or more.

Core shell rubbers are used to improve an adhesive and temporary fix components through physical cross-linking. The core shell rubber is exemplified by Kane Ace MX-153, MX-154, MX-257, MX-960, MX-136, and MX-217 (all manufactured by Kaneka Corp.) and Ganzpearl (manufactured by Aica Kogyo Co., Ltd.). A core shell rubber is a particle having at least two layers of a core layer consisting of rubber components and a hard shell layer. A rubbery material is used for the core layer, and the rubbery material is composed of, for example, a conjugated diene such as polybutadiene, a polymer formed by polymerization of lower alkyl acrylate, a copolymer formed by copolymerization of a monomer capable of reacting with them, and/or a polysiloxane rubber. The core layer is preferably formed from a substance having a glass transition temperature of -20°C or lower to improve impact resistance at low temperature and peeling strength. The shell layer preferably contains a component that shows high affinity to epoxy resin but shows no rubber elasticity. The component is not particularly limited when the components have such characteristics. The component is preferably a polymer formed by polymerization of methyl methacrylate and/or a styrene monomer, or a copolymer formed by copolymerization of a monomer capable of reacting with them from the viewpoint of graft polymerization and affinity to epoxy resin. The shell layer is preferably formed from a substance having a glass transition temperature of 50°C or higher from the viewpoint of adhesiveness.

A coupling agent is used to increase adhesiveness to a substrate, a filler, and a resin. Examples of the coupling agent include silane coupling agents such as vinyltrimethoxysilane, vinyltriethoxysilane, 2-(3,4-epoxycyclohexyl)ethyltrimethoxysilane, 3-glycidoxypropyl methyldimethoxysilane, 3-glycidoxypropyl trimethoxysilane, 3-glycidoxypropyl methyldiethoxysilane, 3-glycidoxypropyl triethoxysilane, p-styryltrimethoxysilane, 3-methacryloxypropyl methyldimethoxysilane, 3-methacryloxypropyl trimethoxysilane, 3-methacryloxypropyl methyldiethoxysilane, 3-methacryloxypropyl triethoxysilane, 3-acryloxypropyl trimethoxysilane, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethyl-butylidene)propylamine, N-phenyl-3-aminopropyltrimethoxysilane, tris-(trimethoxysilylpropyl)isocyanurate, 3-mercaptopropylmethyldimethoxysilane, 3-mercaptopropyltrimethoxysilane, 3-isocyanatepropyltriethoxysilane, and 3-(trimethoxysilyl)propylsuccinic anhydride.

The inorganic filler is used for filling and improving mechanical properties. Examples of the inorganic filler include wollastonite, mica, talc, kaolin, barium sulfate, calcium carbonate, magnesium hydroxide, clay, calcium silicate, aluminium silicate, calcium hydroxide, magnesium hydroxide, aluminium hydroxide, magnesium carbonate, barium carbonate, syenite, chlorite, bentonite, montmorillonite, barite, dolomite, quartz, glass, feldspar, diatomaceous earth, alumina, and graphite; fibers such as a carbon fiber and a glass fiber; silica such as crystalline silica, amorphous silica, fused silica, pyrogenic silica, precipitated silica, pulverizing (fine powder) silica; iron oxide, zinc oxide, titanium oxide, barium oxide, titanium dioxide, hollow glass spheres, and hollow polymer beads. These may be used alone or in combination of two or more.

Spacers are used to adjust the thickness of an adherend. Examples of the spacer include glass beads, fiber, resin beads, and an inorganic filler having a certain degree of hardness and particle size. These may be used alone or in combination of two or more.

Spacer particles have a particle size of preferably from 1 $\mu$m to 200 $\mu$m and more preferably from 10 $\mu$m to 150 $\mu$m. Spacer particles having a particle size of less than 1 $\mu$m makes adjustment of an adherend thickness difficult. Spacer particles having a particle size of more than 200 $\mu$m may cause too large stress in an adherend.

The spacer particles have, for example, a spherical or a fibrous shape. Among them, spherical particles are preferred because the particle size of them can be easily controlled.

The amount of spacer used is preferably from 0.2 parts by mass to 1.5 parts by mass and more preferably from 0.5 parts by mass to 1 part by mass, based on 100 parts by mass of a total amount of the aromatic epoxy resin (A) and the aliphatic epoxy resin (B).

Examples of above-described other additives include a plasticizer, a reactive diluent, a storage stabilizer, an anti-aging agent, an antioxidizing agent, a pigment, a dye, a coloring agent, a coupling agent, a leveling agent, an adhesion-imparting agent, a fire-retardant, an antistatic agent, a conductivity-imparting agent, a lubricant, a slidability-imparting agent, an ultraviolet absorber, a surfactant, a dispersant, a dispersion stabilizer, an antifoaming agent, a dehydrating agent, a cross-linking agent, an antirust agent, and a solvent.

<Method for producing adhesive composition>

The adhesive composition of the present invention can be produced by mixing the components described above. The components can be mixed using a dissolver, a double planetary mixer, a planetary centrifugal mixer, a homogenizer, a three-roll mill, a mixer, and a kneader.

<Method for applying adhesive composition>

The adhesive composition of the present invention can be applied by the following methods. The adhesive composition filled in a syringe is applied using a dispenser in one method and the adhesive composition is applied using a spray, a gun, or a brush in another method. In the application process, the application temperature of the adhesive composition is preferably from 30°C to 60°C. The curing temperature of the adhesive composition is preferably from 120°C to 220°C and more preferably from 140°C to 200°C. The curing time is preferably from 20 minutes to 120 minutes, more preferably from 30 minutes to 90 minutes, and further preferably from 30 minutes to 60 minutes.

<Laminate>

The laminate of the present invention comprises substrate 1, substrate 2, and an adhesive layer of the cured product of the adhesive composition, which is provided between substrate 1 and substrate 2. Examples of substrates 1 and 2 include metals such as iron, aluminium, and steel; fiber reinforced plastics such as CFRP (carbon fiber reinforced plastic) and GFRP (glass fiber reinforced plastic); engineering plastic such as PET (polyethylene terephthalate), PBT (polybutylene terephthalate), PC (polycarbonate), PI (polyimide), and PA (polyamide); and glass.

EXAMPLES

Hereinafter, the present invention will be specifically described with Examples, however, the present invention is not limited to the Examples. The measurement for each inspection item was conducted according to the following methods.

<Tensile lap-shear strength>

In accordance with JIS K 6850: 1999, a test piece was prepared using an adherend of the following substrate degreased with acetone, and then measurement was carried out. In the preparation of the test piece, the adhesive composition was applied to the adherend to form an adhesive layer with a thickness of 0.1 mm, followed by curing at 170°C for 30 minutes. The obtained test piece was tested at a tensile speed of 10 mm/min. The tensile lap-shear strength of the test piece of 20 MPa or more was evaluated to be "Good", and the tensile lap-shear strength of the test piece of less than 20 MPa was evaluated to be "Bad".
Substrate: SPCC-SD (steel plate cold commercial, dimensions: 1.6 mm × 25 mm × 100 mm, manufactured by Engineering Test Service Co.,Ltd.).

<Gel fraction>

The adhesive composition cured at 170°C for 30 minutes was cut into a strip measuring 2.5 cm in length, 5 cm in width, and 0.1 mm in thickness. Then, the strip was weighed (this weight was represented as "A") and then immersed in 100 mL of tetrahydrofuran at 25°C for 1 hour. The strip of cured adhesive composition was removed from the solvent, then dried at 100°C for 1 hour in a hot-air dryer, and weighed again (this weight was represented as "B"). The gel fraction (%) was calculated according to the following equation. The gel fraction of 90% or more was evaluated to be "Good", and the gel fraction of less than 90% was evaluated to be "Bad".

$$\text{Gel fraction (\%)} = \text{B} / \text{A} \times 100$$

<Peak of tanδ>

The tanδ peak was determined by measurement with a dynamic viscoelastic analyzer (model: DVA-220, manufactured by IT Instrumentation Control Co., Ltd.). The adhesive composition cured at 170°C for 30 minutes and cut into a strip was measured for dynamic viscoelasticity under conditions of a frequency of 10 Hz and a heating rate of 4°C/min. The tan$\delta$ peak value obtained by the measurement was taken as an index of heat resistance. The tan$\delta$ peak emerged at a temperature of 80°C or higher was evaluated to be "Good", and the tan$\delta$ peak emerged at a temperature lower than 80°C was evaluated to be "Bad".

<Measurement of curing time>

The curing time was determined by measuring viscoelasticity during curing process of the adhesive composition with a rigid-body pendulum type physical properties testing instrument (model: RPT-3000W, manufactured by A&D Company, Limited). The adhesive composition prepared was applied to an aluminum plate measuring 60 mm in length × 20 mm in width with an applicator at a thickness of 100 $\mu$m. A flat knife-edge type of a pendulum with a moment of inertia of 4000 was selected. Then, the measurement was conducted by raising the temperature of the adhesive composition from room temperature to 170°C at a heating rate of 10°C/min and subsequent heating at 170°C for 60 minutes. The curing time was determined from the time required for the cycle period to stabilize during the curing process. The cycle period that stabilized within 60 minutes was evaluated to be "Good", and the cycle period that did not stabilize within the time and the case in which the degree of lowering of the cycle period before and after curing was less than 0.3 sec were evaluated to be "Bad".

<Total chlorine content>

The total chlorine content (% by mass) of the aliphatic epoxy resin (B) was measured by the method described in JIS K 7243-3: 2005.

<Example 1>

In a container, 80.4 parts by mass of epoxy resin composition (A-1), 19.6 parts by mass of aliphatic epoxy resin (B-3), 60.7 parts by mass of epoxy resin hardener (C-1), 2.8 parts by mass of hardening accelerator (D-1), and 2.8 parts by mass of thixotropic agent (E-1) were charged and mixed by a planetary centrifugal mixer to obtain adhesive composition 1. The obtained adhesive composition 1 was evaluated based on the tensile lap-shear strength, tan$\delta$ peak, curing time, and gel fraction. The results are presented in Table 1.

<Examples 2 to 7 and Comparative Examples 1 to 4>

Adhesive compositions 2 to 11 were prepared in the same manner as Example 1 with the exception that the formulations for preparing the adhesive compositions were changed as shown in Table 1. The obtained adhesive compositions were evaluated based on the tensile lap-shear strength, tan$\delta$ peak, curing time, and gel fraction. The results are presented in Table 1.

[Table 1]

| Blend (parts by mass) | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| Aromatic epoxy resin (A) | A-1 | 80.4 | 80.3 | 80.3 | 80.4 | 80.4 | 75.5 | 80.4 | 89.9 | 80.4 | 78.5 | 75.5 |
| Aliphatic epoxy resin (B) | B-1 (Total chlorine content: 5.7%) | | | | | | | | 10.1 | 19.6 | 21.5 | |
| | B-2 (Total chlorine content: 8.0%) | | | | | | | | | | | 24.5 |
| | B-3 (Total chlorine content: 0.7%) | 19.6 | 19.7 | 19.7 | 19.6 | | | 19.6 | | | | |
| | B-4 (Total chlorine content: 0.3%) | | | | | 19.6 | 24.5 | | | | | |
| Epoxy resin hardener (C) | C-1 | 60.7 | 60.7 | 60.7 | 60.7 | 60.7 | 58.5 | 60.7 | 62.6 | 60.7 | 66.4 | 58.5 |
| Hardening accelerator (D) | D-1 | 2.8 | | | | 2.8 | 2.7 | 2.8 | 3.0 | 2.8 | 3.1 | 2.7 |
| | D-2 | | 1.8 | | | | | | | | | |
| | D-3 | | | 0.5 | | | | | | | | |
| | D-4 | | | | 5.6 | | | | | | | |
| Thixotropic agent (E) | E-1 | 2.8 | 2.8 | 2.8 | 2.9 | 2.8 | 2.7 | 2.8 | 3.0 | 2.8 | 3.1 | 2.7 |
| Inorganic filler (F) | F-1 | | | | | | | 3.0 | | | | |

(continued)

| Blend (parts by mass) | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| Inspection item | Tensile lap-shear strength (MPa) | Good | Good | Good | Good | Good | Good | Good | Bad | Bad | Bad | Good |
| | | 23 | 23 | 21 | 20 | 25 | 25 | 23 | 18 | 6 | 6 | 25 |
| | $\tan\delta$ peak (°C) | Good | Good | Good | Good | Good | Good | Good | Good | Bad | Bad | Good |
| | | 92 | 92 | 92 | 92 | 90 | 84 | 92 | 98 | Not measurable due to fragile coating | | 84 |
| | Curing time (min) | Good | Good | Good | Good | Good | Good | Good | Good | Bad | Bad | Bad |
| | | 40 | 40 | 40 | 40 | 20 | 20 | 15 | 50 | Hardening failure | Hardening failure | Hardening failure |
| | Gel fraction (%) | Good | Good | Good | Good | Good | Good | Good | Bad | Bad | Bad | Bad |
| | | 91 | 93 | 91 | 90 | 95 | 94 | 97 | 56 | 21 | 14 | 80 |

<Raw materials>

The followings are raw materials described in Table 1.

Aromatic epoxy resin A-1: jER-828 (bisphenol A epoxy resin, epoxy equivalent weight: 185 g/eq, manufactured by Mitsubishi Chemical Corporation)

Aliphatic epoxy resin B-1: EX-211 (neopentyl glycol diglycidyl ether, total chlorine content: 5.7%, epoxy equivalent weight: 138 g/eq, manufactured by Nagase ChemteX Corporation)

Aliphatic epoxy resin B-2: ED-505 (trimethylolpropane polyglycidyl ether, total chlorine content: 8.0%, epoxy equivalent weight: 150 g/eq, manufactured by ADEKA CORPORATION)

Aliphatic epoxy resin B-3: EX-211L (neopentyl glycol diglycidyl ether, total chlorine content: 0.7%, epoxy equivalent weight: 130 g/eq, manufactured by Nagase ChemteX Corporation)

Aliphatic epoxy resin B-4: EX-321L (trimethylolpropane polyglycidyl ether, total chlorine content: 0.3%, epoxy equivalent weight: 130 g/eq, manufactured by Nagase ChemteX Corporation)

Epoxy resin hardener C-1: bisphenol A (active hydrogen equivalent: 114 g/eq, manufactured by Mitsubishi Chemical Corporation)

Hardening accelerator D - 1: HX3742 (imidazole adduct type catalyst, manufactured by Asahi Kasei Corporation)

Hardening accelerator D-2: PN-23 (imidazole adduct type catalyst, manufactured by Ajinomoto Fine-Techno Co., Inc.)

Hardening accelerator D-3: 2E4MZ (2-ethyl-4-methylimidazole, manufactured by SHIKOKU CHEMICALS CORPORATION)

Hardening accelerator D-4: TPP (triphenylphosphine, manufactured by Tokyo Chemical Industry Co., Ltd.)

Thixotropic agent E-1: AEROSIL (registered trademark) R805 (hydrophobic fumed silica, manufactured by NIPPON AEROSIL CO., LTD.)

Inorganic filler F-1: CML#35 (calcium oxide, manufactured by Ohmi Chemical Industry Co., Ltd.)

It is evident from Example 1 and Comparative Example 2 that 1.0% by mass or less of a total chlorine content in the aliphatic epoxy resin (B) can significantly improve curing properties. It is clear from Comparative Examples 1 and 2 that more than 1.0% by mass of a total chlorine content in the aliphatic epoxy resin (B) worsened curing properties, indicating that the total chlorine content affects curing time. It is evident from Examples 1 to 4 that no differences in curing properties were observed with different hardening accelerators, indicating that all these hardening accelerators are effective. It is evident from Example 5, Example 6, and Comparative Example 3 that even a multifunctional aliphatic epoxy resin having 1.0% by mass or less of a total chlorine content can significantly improve curing properties. In Example 7, the addition of calcium oxide further enhanced curing properties.

INDUSTRIAL APPLICABILITY

The adhesive composition of the present invention can be suitably used as an adhesive having high adhesiveness and curing properties; therefore, the adhesive composition is expected to make a great contribution to industry, in particular, as a structural adhesive.

**Claims**

1. An adhesive composition comprising:

    an aromatic epoxy resin (A) with two or more functional groups;
    an aliphatic epoxy resin (B) with two or more functional groups;
    an epoxy resin hardener (C);
    a hardening accelerator (D); and
    a thixotropic agent (E);
    wherein the aliphatic epoxy resin (B) has a total chlorine content of 1.0% by mass or less.

2. The adhesive composition according to claim 1, wherein the adhesive composition contains aliphatic epoxy resin (B) with two or more functional groups in an amount of from 1 part by mass to 30 parts by mass, based on 100 parts by mass of a total amount of the aromatic epoxy resin (A) with two or more functional groups and the aliphatic epoxy resin (B) with two or more functional groups.

3. The adhesive composition according to claim 1 or 2, wherein the adhesive composition further comprises a hygroscopic inorganic filler (F).

4. The adhesive composition according to claim 3, wherein the hygroscopic inorganic filler (F) is calcium oxide.

5. A laminate comprising an adhesive layer, wherein the adhesive layer is a cured product of the adhesive composition according to any one of claims 1 to 4.

## INTERNATIONAL SEARCH REPORT

| International application No. |
|---|
| **PCT/JP2022/046837** |

**A. CLASSIFICATION OF SUBJECT MATTER**

*C09J 11/04*(2006.01)i; *C09J 11/06*(2006.01)i; *C09J 163/00*(2006.01)i
FI: C09J163/00; C09J11/06; C09J11/04

According to International Patent Classification (IPC) or to both national classification and IPC

**B. FIELDS SEARCHED**

Minimum documentation searched (classification system followed by classification symbols)

C09J1/00-5/10; C09J7/00-7/50; C08G59/00-59/72

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/188202 A1 (SEKISUI CHEMICAL CO., LTD.) 03 October 2019 (2019-10-03) claims 1, 8-16, paragraphs [0049], [0087], examples 1-30 | 1-3, 5 |
| Y | | 4 |
| X | JP 2017-186483 A (SEKISUI CHEMICAL CO., LTD.) 12 October 2017 (2017-10-12) claim 1, paragraphs [0127]-[0139], examples 5-9, 14-17 | 1-3, 5 |
| Y | | 4 |
| X | JP 2018-30981 A (AJINOMOTO CO., INC.) 01 March 2018 (2018-03-01) claims 1-11, paragraphs [0045]-[0052], examples 1, 2, 5, 6 | 1-3, 5 |
| Y | | 4 |
| X | JP 2021-185239 A (AJINOMOTO CO., INC.) 09 December 2021 (2021-12-09) claim 1, paragraphs [0001], [0045]-[0052], [0083], examples 2, 5, 6 | 1-3, 5 |
| Y | | 4 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 March 2023** | **20 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| | International application No. |
|---|---|
| | **PCT/JP2022/046837** |

### C. DOCUMENTS CONSIDERED TO BE RELEVANT

| Category* | Citation of document, with indication, where appropriate, of the relevant passages | Relevant to claim No. |
|---|---|---|
| X | JP 2008-174577 A (KYOCERA CHEMICAL CORP.) 31 July 2008 (2008-07-31) claims 1-4, paragraphs [0033], [0034], examples 1-3 | 1-3, 5 |
| Y | | 4 |
| X | JP 2019-83225 A (HITACHI CHEMICAL CO., LTD.) 30 May 2019 (2019-05-30) claims 1-9, paragraphs [0002], [0024], [0026], [0042]-[0044], example 3 | 1-3, 5 |
| Y | | 4 |
| X | JP 2007-203670 A (JAPAN EPOXY RESIN KK) 16 August 2007 (2007-08-16) claims 1-16, paragraphs [0007], [0028], [0041], examples 1-9 | 1, 3, 5 |
| Y | | 4 |
| A | | 2 |
| Y | WO 2015/064561 A1 (KANEKA CORP.) 07 May 2015 (2015-05-07) claims 1-3, 16, paragraphs [0119], [0168], examples | 4 |
| A | | 1-3, 5 |
| Y | JP 2020-500234 A (DOW GLOBAL TECHNOLOGIES LLC) 09 January 2020 (2020-01-09) claims 1-14, paragraphs [0037], [0038], [0061]-[0063], examples | 4 |
| A | | 1-3, 5 |
| Y | JP 2015-504457 A (LG CHEM, LTD.) 12 February 2015 (2015-02-12) claims 1-27, paragraphs [0012], [0044]-[0054], examples | 4 |
| A | | 1-3, 5 |

INTERNATIONAL SEARCH REPORT
Information on patent family members

International application No.

**PCT/JP2022/046837**

| Patent document cited in search report | | | Publication date (day/month/year) | Patent family member(s) | | | Publication date (day/month/year) |
|---|---|---|---|---|---|---|---|
| WO | 2019/188202 | A1 | 03 October 2019 | US | 2021/0002528 | A1 | |
| | | | | claims 1, 8-16, paragraphs [0101], [0191], examples 1-30 | | | |
| | | | | EP | 3778821 | A1 | |
| | | | | CN | 111801396 | A | |
| JP | 2017-186483 | A | 12 October 2017 | (Family: none) | | | |
| JP | 2018-30981 | A | 01 March 2018 | (Family: none) | | | |
| JP | 2021-185239 | A | 09 December 2021 | (Family: none) | | | |
| JP | 2008-174577 | A | 31 July 2008 | (Family: none) | | | |
| JP | 2019-83225 | A | 30 May 2019 | (Family: none) | | | |
| JP | 2007-203670 | A | 16 August 2007 | (Family: none) | | | |
| WO | 2015/064561 | A1 | 07 May 2015 | US | 2016/0244603 | A1 | |
| | | | | claims 1-3, paragraphs [0142], [0143], [0192], [0193], examples | | | |
| | | | | EP | 3064520 | A1 | |
| | | | | CN | 105683238 | A | |
| JP | 2020-500234 | A | 09 January 2020 | US | 2019/0284454 | A1 | |
| | | | | claims 1-14, paragraphs [0050], [0051], [0081], [0082], examples | | | |
| | | | | EP | 3529328 | A1 | |
| | | | | CN | 110050052 | A | |
| JP | 2015-504457 | A | 12 February 2015 | US | 2014/0091296 | A1 | |
| | | | | claims 1-25, paragraphs [0006], [0011], [0041]-[0050], examples | | | |
| | | | | EP | 2767566 | A1 | |
| | | | | KR | 10-2013-0054189 | A | |
| | | | | CN | 103930501 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6632401 B
- WO 2017191801 A